# EUROPÄISCHE PATENTSCHRIFT

(11) **EP 1 334 012 B1**
(45) Veröffentlichungstag und Bekanntmachung des Hinweises auf die Patenterteilung: **13.04.2005**
(21) Anmeldenummer: 01983720.2
(22) Anmeldetag: 13.11.2001
(51) Int. Cl.: B60R 22/26

(54) **UMLENKBESCHLAG FÜR DEN SICHERHEITSGURT EINES KRAFTFAHRZEUGES**
DEFLECTION FITTING FOR THE SAFETY BELT OF A MOTOR VEHICLE
ARMATURE DE RENVOI DESTINEE A LA CEINTURE DE SECURITE D'UNE AUTOMOBILE

(30) Priorität: 13.11.2000 DE 10056127
(43) Veröffentlichungstag der Anmeldung: 13.08.2003
(73) Patentinhaber: Intier Automotive Seating Systems GmbH, 63762 Grossostheim-Ringheim (DE)
(72) Erfinder: BRÖNNER, Martin, D-97816 Lohr/Main (DE); KRONER, Wolfgang, D-63639 Florsbachtal (DE); HAPP, Uwe, D-97816 Lohr (DE)
(74) Vertreter: Pfiz, Thomas, Dr.
(86) Internationale Anmeldenummer: PCT/IB2001/002136
(87) Internationale Veröffentlichungsnummer: WO 2002/038423

(56) Entgegenhaltungen:
- DE-A- 2 601 171
- US-A- 3 877 114
- US-A- 5 096 224
- US-A- 5 385 370

## Beschreibung

Die Erfindung betrifft einen Umlenkbeschlag für den Sicherheitsgurt eines Kraftfahrzeuges, bestehend aus einer den Sicherheitsgurt umschließenden Gurtführung und aus einem Schwenklager, um das die Gurtführung um eine Achse parallel zur Durchlaufrichtung des Gurtes schwenkbar ist, wobei das Schwenklager am Fahrzeug beziehungsweise einem damit verbundenen Teil befestigt ist.

Umlenkbeschläge finden bei allen möglichen Anordnungen von Sicherheitsgurten Verwendung, die über die Schulter ihres Fahrers oder. Passagiers verlaufen. Sie sorgen dafür, dass der mit einem Ende seitlich, unter, hinter oder neben dem Passagier befestigte Gurt immer, also unabhängig von der Sitzposition über die jeweilige Schulter geführt ist.

Umlenkbeschläge sind daher in oder über Schulterhöhe an der B- oder C- Säule des Fahrzeuges oder an der Rückenlehne des jeweiligen Sitzes angebracht, siehe beispielsweise DE 198 14 845 A1. Ihr Hauptteil ist eine Gurtführung, die ein geschlossenes abgeflachtes den Gurt umfassendes Kettenglied ist. Das Kettenglied besteht aus zwei parallelen geraden Teilen, über deren einen der Gurt abläuft, die von einem eng gekrümmten Teil verbunden sind. Wenn das auflaufende und das ablaufende Trum des Gurtes normal zum geraden Teil des Kettengliedes ausgerichtet und nicht verdreht sind, läuft der Gurt ohne Schwierigkeiten ab. Wenn die Winkel der beiden Trume von der Normalen abweichen, tendiert das Kettenglied dazu, sich nach der Winkelsymmetrale der Trume einzustellen.

Dadurch aber nimmt die Qualität der Führung ab, insbesondere wenn die Einstellung des Kettengliedes durch Reibung behindert ist, und wegen des kleinen Abstandes von dem Schwenklager. Der Gurt schiebt sich dabei in den eng gekrümmten Teil des Kettengliedes und wird so gefaltet beziehungsweise ganz umgedreht. Besonders störend ist das bei an der Lehne des Sitzes befestigten Umlenkbeschlägen, bei denen die Winkelabweichung von der Normalen in der Regel größer ist.

Aus der gattungsbildenden DE-A 26 01 171 ist ein Umlenkbeschlag mit zwei um eine Schwenkachse unabhängig voneinander schwenkbaren, im Abstand voneinander angeordneten Führungsgliedern bekannt, wobei die Führungsglieder durch eine Durchlauföse und einen an seinem freien Ende mit einer Umlenköse versehenen Schwenkarm gebildet sind. Die Durchlaufrichtung des Gurtes zwischen den Führungsgliedern verläuft entsprechend dem Schwenkarm etwa parallel zur Fahrzeugseitenwand und damit senkrecht zur Schwenkachse. Dadurch tritt aber ein verhältnismäßig großer Spreizwinkel des Gurtes im Umlenkbereich auf.

Die US-A 5 385 370 zeigt zwei so genannte D-Ringe als schwenkbewegliche Kettenglieder eines Umlenkbeschlages..Diese sind jedoch im seitlichen Abstand der Ringöffnungen gegeneinander versetzt und verschiedenen Gurten zugeordnet, so dass für den Einzelgurt wie eingangs erwähnt Probleme in der Qualität der Führung bestehen.

Es ist daher Ziel der Erfindung, einen Umlenkbeschlag zu schaffen, der diese Nachteile nicht hat. Er soll sich auch bei größeren Winkelabweichungen von der Normalen und bei größeren Torsionswinkeln leicht einstellen.

Erfindungsgemäß wird das dadurch erreicht, dass die Gurtführung um eine Achse parallel zur Durchlaufrichtung des Gurtes schwenkbar ist und aus zwei jeweils unabhängig voneinander in dem Schwenklager schwenkbaren Kettengliedem besteht, die in einigem Abstand voneinander angeordnet sind. Da sich die beiden Kettenglieder gegeneinander verdrehen können, sind größere Winkelabweichungen ohne Verlaufen des Gurtes möglich, wobei sich der kleine Abstand der Schwenkachse sogar als Vorteil erweist. Der Abstand zwischen beiden Kettengliedern erlaubt es dem Gurt, sich etwas zu verdrehen. Dabei werden die äusseren Litzen des Gurtes etwas stärker gespannt, was ein Hochkriechen des Gurtes in den stark gekrümmten Teil der Kettenglieder weiter erschwert.

In einer vorteilhaften Ausführungsform besitzt jedes Kettenglied eine vom Schwenkbolzen durchsetzte Lageröse und es ist zwischen beiden Lagerösen eine Büchse vorgesehen. Die Büchse dient als Lagerung, sodaß sich das Kettenglied mit wenig Reibung einstellen kann, und dient auch als Ab-standhalter zwischen den beiden Kettengliedern. Die Büchse kann so aus-gebildet sein, dass der Schwenkbolzen mittels der Büchse am Fahrzeug beziehungsweise einem damit verbundenen Teil befestigt ist. Der Schwenk-bolzen dient so nur der Lagerung beider Kettenglieder mit gleich kleiner Reibung, die Befestigung über die Büchse bringt mittige Beanspruchung des Schwenkbolzens.

In einer vorteilhaften Weiterbildung ist die Büchse an einem Sicherheitsbügel befestigt und in ihrer Umfangsrichtung unterbrochen, wobei der Sicherheitsbügel einen Fangarm besitzt, auf dem der Sicherheitsgurt aufliegt, wenn die Büchse aufgerissen wird. Der Sicherheitsbügel wirkt somit nebst seiner Haltefunktion als gestaffelte zweite Sicherung, wenn im Kollisionsfall die Beanspruchung der Büchse einen Grenzwert überschreitet. Dann wird der Schwenkbolzen mit den beiden Kettengliedern freigegeben und der Gurt findet an dem Fangarm Halt, der stärker dimensioniert sein kann.

Schließlich ist die Erfindung mit besonderem Vorteil anzuwenden, wenn der Sicherheitsbügel an der Rückenlehne eines Sitzes befestigt ist. Somit hat die Erfindung auch einen Kraftfahrzeugsitz mit einem Umlenkbeschlag nach einem der vorhergehenden Ansprüche zum Gegenstand.

Im Folgenden wird die Erfindung anhand von Abbildungen beschrieben und erläutert. Es stellen dar:
- Fig.1:: Einen Sitz mit einem erfindungsgemäßen Umlenkbeschlag von vorne,
- Fig.2:: Detail II in Fig.1, vergrößert,
- Fig.3:: Schnitt AA in Fig.2, weiter vergrößert,
- Fig.4:: wie Fig.2, jedoch in Extremstellung.

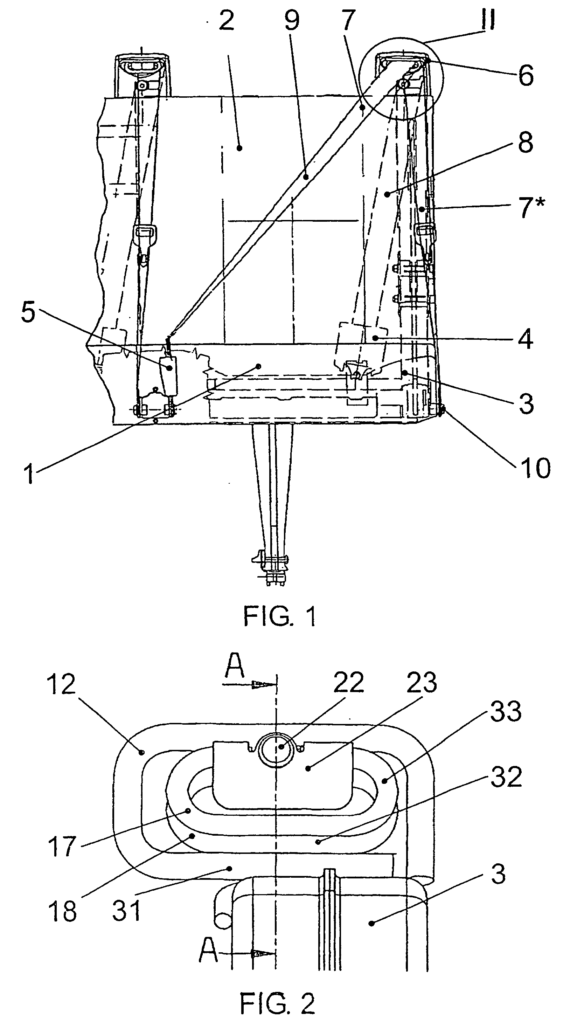

Fig.1 zeigt teilweise eine Sitzbank eines Kraftfahrzeuges. Sie besteht aus einer Sitzfläche 1 und einer Rückenlehne 2 mit einem Sitzrahmen 3. An diesem Sitzrahmen ist hinter dem Sitz, daher strichliert, ein Gurtroller 4, neben der Sitzfläche 1 ein Gurtschloß 5 und über dem Sitz ein Umlenkbeschlag 6 befestigt. Der Gurtroller 4 enthält den üblichen Aufwickel- und Spannmechanismus. Der Umlenkbeschlag 6 ist hier oben an der Rückenlehne 2 über der Schulter eines nicht dargestellten Passagieres vorgesehen, er könnte aber auch an der nicht dargestellten Seitenwand des Fahrzeuges befestigt sein.

Ein Sicherheitsgurt 7 ist der Einfachheit halber nur als Schultergurt dargestellt. Er besteht dann aus einem ersten (auflaufenden) Trum 8, das vom Gurtroller 4 zum Umlenkbeschlag 6 verläuft und aus einem zweiten Trum 9, dem ablaufenden, das vom Umlenkbeschlag 6 zum Gurtschloß 5 verläuft. Wenn es sich um einen Dreipunktgurt handelt, ist ein Befestigungspunkt 10 auf der anderen Seite des Passagieres vorgesehen, zu dem der Sicherheitsgurt dann weiter geführt ist. Das zweite Trum 9 bildet dann eine Schlaufe, die vom Gurtschloß 5 zu diesem Befestigungspunkt 10 verläuft. Mit 7* ist ein solcher Dreipunktgurt in Ruhestellung bezeichnet.

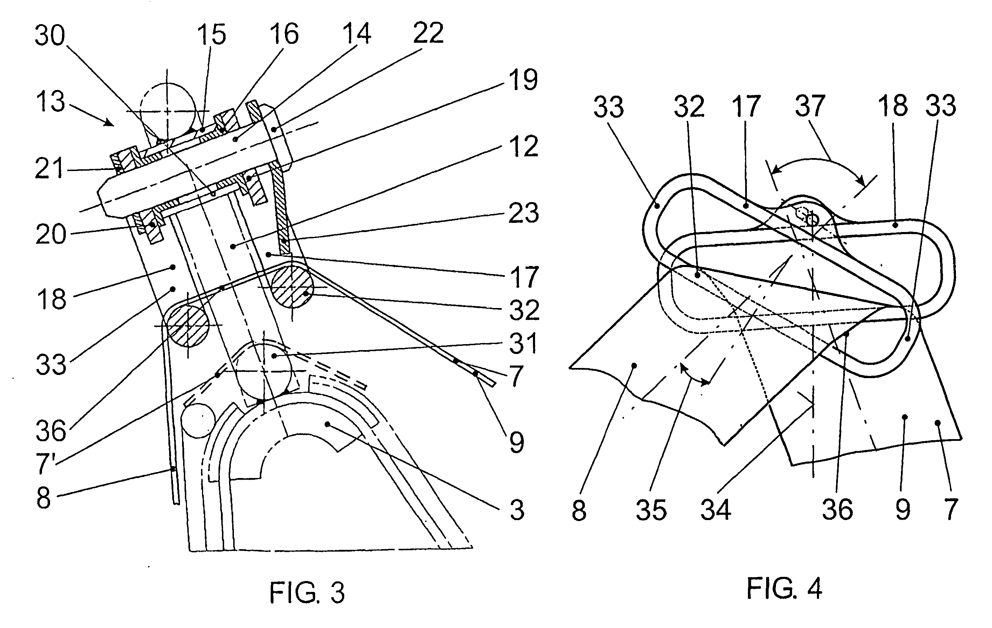

Fig.2 und Fig.3 zeigen den Umlenkbeschlag 6 im Detail. An dem Sitzrahmen 3 ist ein Sicherheitsbügel 12 befestigt, zB angeschweißt, an dem in einem Schwenklager 13 die Gurtführung aufgehängt ist. Das Schwenklager 13 wird von einem Schwenkbolzen 14 gebildet, der mittels als Radial- und als Spurlager wirkender Lagerschalen 16 in einer Büchse 15 gelagert ist. Die Büchse 15 ist fest mit dem Sicherheitsbügel 12 verbunden, etwa verschweißt.

Die Gurtführung wird erfindungsgemäß von zwei um den Schwenkbolzen 14 unabhängig voneinander schwenkbaren Kettengliedern 17, 18 gebildet. Diese besitzen Lagerösen 19,20, die vom Schwenkbolzen 14 durchsetzt sind. Zur axialen Fixierung besitzt der Schwenkbolzen 14 einen Kopf 22 und am anderen Ende eine Beilagscheibe 21, auf die beispielsweise ein nicht dargestellter Splint folgt. Weiters ist am Schwenkbolzen noch ein Abweisblech 23 vorgesehen.

Die Büchse 15 weist an ihrem Umfang einen Schlitz 30 auf, wodurch sie sich bei extremer Belastung, im Kollisionsfall, öffnet und der Sicherheitsgurt 7 mitsamt der Gurtführung auf einen Fangarm 31 des Sicherheitsbügels 12 fällt, was in Fig. 3 strichliert eingezeichnet und mit 7' bezeichnet ist.

Die Kettenglieder 17, 18 sind geschlossene Stahlringe, die aus zwei geraden Teilen 32 und zwei stark gekrümmten Teilen 33 bestehen, somit zusammengedrückten Gliedern einer normalen Kette ähneln.

Nun wird die Wirkung der unabhängig voneinander schwenkbaren Kettenglieder 17, 18 anhand von Fig.4 erläutert, die die Gurtführung in einem extremen Fall zeigt, in dem die beiden Trume 8, 9 des Sicherheitsgurtes 7 einen erheblichen Winkel 37 miteinander einschließen. Eine Gurtführung mit einem einzigen Kettenglied nach dem Stand der Technik würde sich auf die Winkelsymmetrale 34 einstellen. Der Gurt liefe dann schräg durch das Kettenglied, und zwar mit einem Schräglaufwinkel, der etwa die Hälfte des Winkels 37 beträgt. Dadurch gerät der Gurt leicht in den stark gekrümmten Teil 33 des Kettengliedes, klettert an diesem hoch und faltet sich bzw ver-dreht sich ganz.

Dank der beiden unabhängig voneinander schwenkbaren Kettenglieder 17, 18 und des Abstandes dieser beiden voneinander in Längsrichtung des Gur-tes, können sich die beiden Kettenglieder 17, 18 so einstellen, dass der Schräglaufwinkel 35 des auflaufenden Trumes 8 des Gurtes 7 im Kettenglied 17 und ebenso der des ablaufenden Trumes 9 im Kettenglied 18 wesentlich kleiner ist. Der Teil 36 des Sicherheitsgurtes 7 zwischen den beiden Kettengliedern 17, 18 (siehe auch Fig.3) wird dabei etwas verdreht.

Der geringe Schräglaufwinkel hat zur Folge, dass der Gurt 7 nicht mehr an den stark gekrümmten Teilen 33 der Kettenglieder 17, 18 in die Höhe kriechen kann. Dieselbe Wirkung tritt auch ein, wenn der Umlenkbeschlag 6 am Fahrzeugkörper, etwa an einer nicht dargestellten B-Säule befestigt ist, ungeachtet der in Draufsicht um einen rechten Winkel gedrehten Anordnung des Umlenkbeschlages.

## Patentansprüche

1. Umlenkbeschlag für den Sicherheitsgurt eines Kraftfahrzeuges, bestehend aus einer den Sicherheitsgurt (7) umschließenden Gurtführung (17, 18) und aus einem Schwenklager (13), um das die Gurtführung schwenkbar ist, wobei das Schwenklager (13) am Fahrzeug beziehungsweise einem damit verbundenen Teil befestigt ist, wobei die Gurtführung (17, 18) um eine Achse parallel zur Durchlaufrichtung des Gurtes (7; 36) schwenkbar ist, **dadurch gekennzeichnet, dass** die Gurtführung (17, 18) aus zwei jeweils unabhängig voneinander in dem Schwenklager (13) schwenkbaren Kettengliedern (17, 18) besteht, die in Durchlaufrichtung des Gurtes (7) in einigem Abstand voneinander angeordnet sind.

2. Umlenkbeschlag nach Anspruch 1, **dadurch gekennzeichnet, dass** jedes Kettenglied (17, 18) eine von einem Schwenkbolzen (14) durchsetzte Lageröse (19, 20) besitzt und dass zwischen beiden Lagerösen eine Büchse (15) vorgesehen ist.

3. Umlenkbeschlag nach Anspruch 2, **dadurch gekennzeichnet, dass** der Schwenkbolzen (14) mittels der Büchse (15) am Fahrzeug beziehungsweise einem damit verbundenen Teil befestigt ist.

4. Umlenkbeschlag nach Anspruch 2 oder 3, **dadurch gekennzeichnet, dass** die Büchse (15) an einem Sicherheitsbügel (12) befestigt und mit einem Längsschlitz (30) versehen ist, wobei der Sicherheitsbügel (12) einen Fangarm (31) besitzt, auf dem der Sicherheitsgurt (7) aufliegt, wenn die Büchse (15) aufgerissen wird.

5. Umlenkbeschlag nach Anspruch 4, **dadurch gekennzeichnet, dass** der Sicherheitsbügel (12) an der Rückenlehne (2) eines Sitzes befestigt ist.

6. Kraftfahrzeugsitz mit einem Umlenkbeschlag (6) nach einem der vorhergehenden Ansprüche.

## Claims

1. Deflecting fitting for the safety belt of a motor vehicle, said fitting consisting of a belt guide (17, 18) which encloses the safety belt (7) and of a swivel bearing (13) about which said belt guide can be swivelled, wherein the swivel bearing (13) is fastened to the vehicle or to a part connected thereto and wherein the belt guide (17, 18) can be swivelled about an axis parallel to the direction of running through of the belt (7; 36), **characterised in that** the belt guide (17, 18) consists of two chain links (17, 18) which can each be swivelled, independently of one another, in the swivel bearing (13) and which are disposed at some distance from one another in the direction of running through of the belt (7).

2. Deflecting fitting according to claim 1, **characterised in that** each chain link (17, 18) possesses a bearing eye (19, 20) through which a swivel bolt (14) passes, and that a bush (15) is provided between the two bearing eyes.

3. Deflecting fitting according to claim 2, **characterised in that** the swivel bolt (14) is fastened by means of the bush (15) to the vehicle or to a part connected thereto.

4. Deflecting fitting according to claim 2 or 3, **characterised in that** the bush (15) is fastened to a safety shackle (12) and is provided with a longitudinal slit (30), said safety shackle (12) possessing an intercepting arm (31) on which the safety belt (7) rests if the bush (15) is torn open.

5. Deflecting fitting according to claim 4, **characterised in that** the safety shackle (12) is fastened to the backrest (2) of a seat.

6. Motor vehicle seat having a deflecting fitting (6) according to one of the preceding claims.

## Revendications

1. Armature de renvoi destinée à la ceinture de sécurité d'un véhicule automobile, constituée d'un guide-ceinture (17, 18) entourant la ceinture de sécurité (7), et d'un coussinet de pivotement (13) autour duquel ledit guide-ceinture peut pivoter, le coussinet de pivotement (13) étant respectivement fixé au véhicule ou à une pièce reliée à ce dernier, le guide-ceinture (17, 18) pouvant pivoter autour d'un axe, parallèlement au sens de défilement de la ceinture (7 ; 36), **caractérisée par le fait que** le guide-ceinture (17, 18) se compose de deux chaînons (17, 18) qui peuvent respectivement pivoter indépendamment l'un de l'autre dans le coussinet de pivotement, et sont agencés à une certaine distance l'un de l'autre dans le sens de défilement de la ceinture (7).

2. Armature de renvoi selon la revendication 1, **caractérisée par le fait que** chaque chaînon (17, 18) possède un oeillet de montage (19, 20) traversé par une cheville de pivotement (14) ; et **par le fait qu'**une douille (15) est prévue entre les deux oeillets de montage.

3. Armature de renvoi selon la revendication 2, **caractérisée par le fait que** la cheville de pivotement (14) est respectivement fixée, au moyen de la douille (15), au véhicule ou à une pièce reliée à ce dernier.

4. Armature de renvoi selon la revendication 2 ou 3, **caractérisée par le fait que** la douille (15) est fixée à un étrier de sûreté (12) et est munie d'une fente longitudinale (30), ledit étrier de sûreté (12) possédant un bras récepteur (31) sur lequel la ceinture de sécurité (7) repose pour le cas où la douille (15) est rompue.

5. Armature de renvoi selon la revendication 4, **caractérisée par le fait que** l'étrier de sûreté (12) est fixé au dossier (2) d'un siège.

6. Siège de véhicule automobile équipé d'une armature de renvoi (6) selon l'une des revendications précédentes.
